# EUROPEAN PATENT SPECIFICATION

(11) **EP 2 513 760 B1**
(45) Date of publication and mention of the grant of the patent: **06.06.2018**
(21) Application number: 10838108.8
(22) Date of filing: 30.11.2010
(51) Int. Cl.: G06F 3/0488

(54) **METHOD AND APPARATUS FOR CHANGING OPERATING MODES**
VERFAHREN UND VORRICHTUNG ZUM ÄNDERN VON BETRIEBSMODI
PROCÉDÉ ET APPAREIL POUR CHANGEMENT DE MODES DE FONCTIONNEMENT

(30) Priority: 18.12.2009 US 288109 P; 05.03.2010 US 311040 P; 08.06.2010 US 352712 P; 14.07.2010 US 836397
(43) Date of publication of application: 24.10.2012
(73) Proprietor: Synaptics, Incorporated, California 95054 (US)
(72) Inventor: DAY, Shawn, P., San Jose California 95138 (US); TRENT, JR., Raymond, A., San Jose California 95126 (US); GILLESPIE, David, W., Los Gatos California 95033 (US)
(74) Representative: MacDougall, Alan John Shaw
(86) International application number: PCT/US2010/058377
(87) International publication number: WO 2011/075307

(56) References cited:
- WO-A2-02/08881
- WO-A2-2008/094791
- GB-A- 2 433 402
- US-A1- 2005 052 427
- US-A1- 2006 026 535
- US-A1- 2007 236 475
- US-B1- 7 030 861
- US-B2- 7 477 233

## Description

### FIELD OF THE INVENTION

This invention generally relates to electronic devices.

### BACKGROUND OF THE INVENTION

Input devices including proximity sensor devices (also commonly called touchpads or touch sensor devices) are widely used in a variety of electronic systems. A proximity sensor device typically includes a sensing region, often demarked by a surface, in which the proximity sensor device determines the presence, location and/or motion of one or more input objects. Proximity sensor devices may be used to provide interfaces for the electronic system. For example, proximity sensor devices are often used as input devices for larger computing systems (such as opaque touch pads integrated in, or peripheral to, notebook or desktop computers). Proximity sensor devices are also often used in smaller computing systems (such as touch screens integrated in cellular phones).

There is a continuing need for improvements in input devices.

WO 2008/094791 A2 discloses methods and systems for implementing gestures with sensing devices. More particularly, the methods and systems relate to gesturing with multipoint sensing devices.

GB 2 402 105 A discloses a data input method for a computing device using a touch screen, wherein selection of a virtual key occurs when a user presses down on the screen overlying the virtual key with a force exceeding a first pre-defined force, and confirmation of selection of a virtual key occurs when the user presses down on the screen overlying the virtual key with a force exceeding a second pre-defined force and actuates a mechanical switch underlying the touch screen.

### SUMMARY

The present invention is defined in the appended independent claims, and provides an input device, a method of operating an electronic system, and a processing system.

An input device comprising a sensing element (and perhaps other sensing elements), and a processing system coupled to the sensing element is disclosed. The sensing element is configured to detect object motion in a sensing region. The processing system is configured to operate in a first mode, to change from operating in the first mode to operating in a second mode in response to recognizing a characteristic object motion in the sensing region, and to operate in the second mode. The first mode may be a pointing mode and the second mode may be an enhanced gesturing mode. The processing system recognizes a plurality of gesture commands associated with a plurality of different gesture actions while in the enhanced gesturing mode. Thus, the processing system recognizes a first type of sliding input in the sensing region as a pointing command while in the pointing mode, and recognizes the first type of sliding input in the sensing region as one of the plurality of gesture commands while in the enhanced gesturing mode.

A method of operating an electronic system comprising a proximity sensor device and a display screen is disclosed. The proximity sensor device is configured to detect object motion in a sensing region and the display screen is configured to provide a visual display. The method comprises operating in a pointing mode, where the electronic system is configured to recognize a plurality of types of sliding input in the sensing region as pointing commands for interacting with the visual display while in the pointing mode. The method further comprises changing from operating in the pointing mode to operating in an enhanced gesturing mode in response to the recognizing a characteristic object motion in the sensing region as the mode changing gesture. While in the enhanced gesturing mode, the electronic system is configured to recognize the plurality of types of sliding input as a plurality of gesture commands associated with a plurality of different gesture actions while in the enhanced gesturing mode. The method also comprises providing feedback detectable by a user indicative of the electronic system operating in the enhanced gesturing mode.

An input device comprising at least one sensing element, an input surface configured to be contacted by input objects, and a processing system coupled to the at least one sensing element is disclosed. The processing system is configured to operate the at least one sensing element to detect input objects arriving at and lifting from the input surface, and to change from a first operating mode to a second operating mode in response to an identification of a mode changing gesture. The mode changing gesture comprises an input sequence comprising a set of input objects arriving at the input surface followed by a first subset of the set of input objects lifting from the input surface, while a second subset of the set of input objects remains on the input surface. The first subset and the second subset are both non-empty proper subsets of the set of input objects

A program product comprising non-transient electronic media bearing a proximity sensor program is disclosed. The electronic media is readable by the processing system. The input device program is executable by a processing system to operate an input device to detect input objects arriving at and lifting from the input surface, identify a mode changing gesture, and change from a first operating mode to a second operating mode in response to identification of the mode changing gesture. The mode changing gesture comprises an input sequence comprising a plurality of input objects arriving at the input surface followed by at least one of the plurality of input objects lifting from the input surface, while at least another one of the plurality of input objects remains on the input surface.

### BRIEF DESCRIPTION OF DRAWINGS

The preferred exemplary embodiment of the present invention will hereinafter be described in conjunction with the appended drawings, where like designations denote like elements, and:
FIG. 1 is a block diagram of an exemplary input device, in accordance with embodiments of the invention,
FIGS. 2-3 are state diagrams showing potential operation of the exemplary input device of FIG. 1, in accordance with embodiments of the invention,
FIGS. 4 and 6 are top and side/cross-sectional views of example changes in contact state,
FIG. 5 shows top and side/cross-section views of changes in contact state in accordance with an embodiment of the invention,
FIGS. 7-11 are top views of example mode switching gestures,
FIGS. 12-13 are flow charts of example methods, in accordance with embodiments of the invention, and FIG. 14 is a flow chart of another example method,
FIG. 15 is an example screen indicating an Enhanced Gesturing Mode, and
FIGS. 16-18 are tables showing example gesture commands and example actions.

### DETAILED DESCRIPTION OF THE INVENTION

The following detailed description is merely exemplary in nature and is not intended to limit the invention or the application and uses of the invention. Furthermore, there is no intention to be bound by any expressed or implied theory presented in the preceding technical field, background, brief summary or the following detailed description.

Various embodiments of the present invention provide input devices and methods that facilitate improved usability.

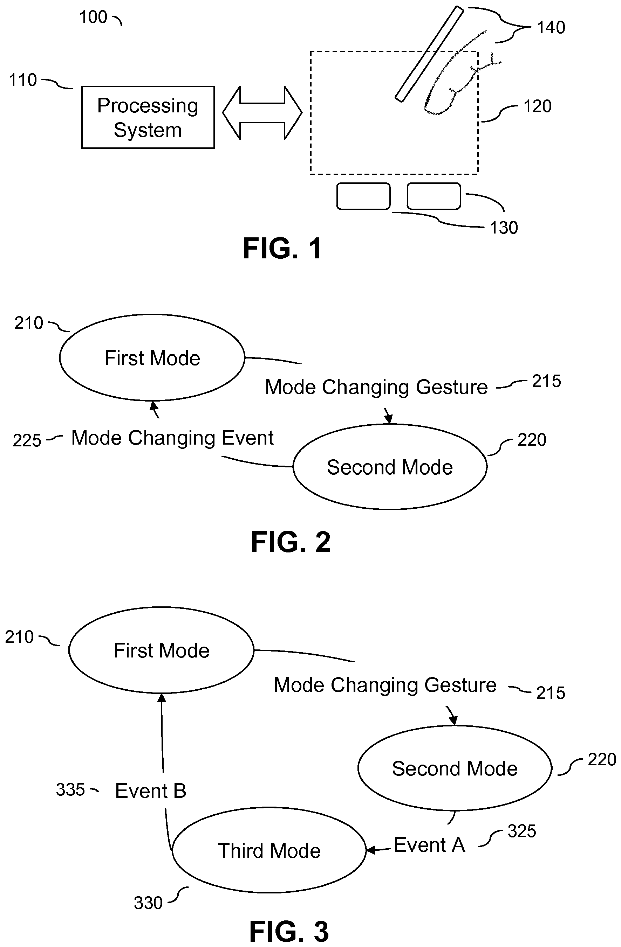

Turning now to the figures, FIG. 1 is a block diagram of an exemplary input device 100, in accordance with embodiments of the invention. The input device 100 may be configured to provide input to an electronic system (not shown). As used in this document, "electronic system" (also "electronic device") broadly refers to any system capable of electronically processing information. Some non-limiting examples of electronic systems include the following. Example electronic systems include personal computers of all sizes and shapes, such as desktop computers, laptop computers, tablets, web browsers, book readers, and personal digital assistants (PDAs). Additional example electronic systems include composite input devices, such as physical keyboards that include input device 100 and separate joysticks or key switches. Further example electronic systems include peripherals such as data input devices (including remote controls and mice), and data output devices (including display screens and printers). Other examples include remote terminals, kiosks, and video game machines. Other examples include communication devices (including cellular phones such as smart phones), and media devices (including recorders, editors, and players such as televisions, set top boxes, music players, digital photo frames, and digital cameras). Additionally, the electronic system could be a host or a slave to the input device.

The input device 100 can be implemented as a physical part of the electronic system, or be physically separate from the electronic system. As appropriate, the input device 100 may communicate with parts of the electronic system using any one or more of the following: buses, networks, and other wired or wireless interconnections. Examples include I²C, SPI, PS/2, Universal Serial Bus (USB), Bluetooth, RF, and IRDA.

In FIG. 1, the input device 100 is shown as a proximity sensor device (also often referred to as a touchpad or a touch sensor device) configured to sense input provided by one or more input objects 140 in a sensing region 120. Example input objects include fingers and styli, as shown in FIG. 1.

Sensing region 120 encompasses any space above, around, in and/or near the input device 100 in which the input device 100 is able to detect user input (e.g., user input provided by one or more input objects 140). The sizes, shapes, and locations of particular sensing regions may vary widely from embodiment to embodiment. In some embodiments, the sensing region 120 extends from a surface of the input device 100 in one or more directions into space until signal-to-noise ratios prevent sufficiently accurate object detection. The distance to which this sensing region 120 extends in a particular direction, in various embodiments, may be on the order of less than a millimeter, millimeters, centimeters, or more, and may vary significantly with the type of sensing technology used and the accuracy desired. Thus, some embodiments sense input that comprises no contact with any surfaces of the input device 100, contact with an input surface (e.g. a touch surface) of the input device 100, contact with an input surface of the input device 100 coupled with some amount of applied force or pressure, and/or a combination thereof. In some embodiments, the sensing region 120 has a rectangular shape when projected onto an input surface of the input device 100.

The input device 100 may utilize any combination of sensor components and sensing technologies to detect user input in the sensing region 120. The input device 100 comprises one or more sensing elements for detecting user input. As several non-limiting examples, the input device 100 may use capacitive, elastive, resistive, inductive, surface acoustic wave, and/or optical techniques.

Some implementations are configured to provide images that span one, two, three, or higher dimensional spaces. Some implementations are configured to provide projections of input along particular axes or planes.

In some resistive implementations of the input device 100, a flexible and conductive first layer is separated by one or more spacer elements from a conductive second layer. During operation, one or more voltage gradients are created across the layers. Pressing the flexible first layer may deflect it sufficiently to create electrical contact between the layers, resulting in voltage outputs reflective of the point(s) of contact between the layers. These voltage outputs may be used to determine positional information.

In some inductive implementations of the input device 100, one or more sensing elements pick up loop currents induced by a resonating coil or pair of coils. Some combination of the magnitude, phase, and frequency of the currents may be used to determine positional information.

In some capacitive implementations of the input device 100, voltage or current is applied to create an electric field. Nearby input objects cause changes in the electric field, and produce detectable changes in capacitive coupling that may be detected as changes in voltage, current, or the like.

Some capacitive implementations utilize arrays or other patterns of capacitive sensing elements to create electric fields. In some capacitive implementations, separate sensing elements may be ohmically shorted together to form larger sensor electrodes. Some capacitive implementations utilize resistive sheets, which may be uniformly resistive.

Some capacitive implementations utilize "self capacitance" (also "absolute capacitance") sensing methods based on changes in the capacitive coupling between sensor electrodes and an input object. In various embodiments, an input object near the sensor electrodes alters the electric field near the sensor electrodes, thus changing the measured capacitive coupling. In one implementation, an absolute capacitance sensing method operates by modulating sensor electrodes with respect to a reference voltage (e.g. system ground), and by detecting the capacitive coupling between the sensor electrodes and input objects.

Some capacitive implementations utilize "mutual capacitance" (also "transcapacitance") sensing methods based on changes in the capacitive coupling between sensor electrodes. In various embodiments, an input object near the sensor electrodes alters the electric field between the sensor electrodes, thus changing the measured capacitive coupling. In one implementation, a transcapacitive sensing method operates by detecting the capacitive coupling between one or more transmitting electrodes and one or more receiving electrodes. Transmitting sensor electrodes may be substantially modulated relative to a reference voltage (e.g. system ground) to facilitate transmission, and receiving sensor electrodes may be held substantially constant relative to the reference voltage to facilitate receipt. Sensor electrodes may be dedicated transmitters or receivers, or they may transmit as well as receive.

In FIG. 1, a processing system (or "processor") 110 is shown as part of the input device 100. The processing system 110 is configured to operate the hardware of the input device 100 to detect input in the sensing region 120. The processing system 110 comprises parts of or all of one or more integrated circuits (ICs); and, in some embodiments, the processing system 110 also comprises firmware code, software code, and/or the like. In some embodiments, components comprising the processing system 110 are located together, such as near sensing element(s) of the input device 100. In other embodiments, components of processing system 110 are physically separated, with one or more components close to sensing element(s) of input device 100, and one or more components elsewhere. For example, the input device 100 may be peripheral to a desktop computer, and the processing system 110 may comprise software configured to run on a central processing unit of the desktop computer and one or more ICs (perhaps with associated firmware) separate from the central processing unit. As another example, the input device 100 may be physically integrated in a phone, and the processing system 110 may comprise circuits and firmware that are part of a main processor of the phone. In some embodiments, the processing system 110 is dedicated to implementing the input device 100. In other embodiments, the processing system 110 also performs other functions, such as operating display screens, driving haptic actuators, etc.

The processing system 110 may be implemented as a set of modules that handle different functions of the processing system 110. Each module may comprise circuitry that is a part of the processing system 110, firmware, software, or a combination thereof. In various embodiments, different combinations of modules may be used. Example modules include hardware operation modules for operating hardware such as sensor electrodes and display screens, data processing modules for processing data such as sensor signals and positional information, and reporting modules for reporting information. Further example modules include sensor operation modules configured to operate sensing element(s) to detect input, identification modules configured to identify gestures such as mode changing gestures, and mode changing modules for changing operation modes.

In some embodiments, the processing system 110 responds to user input (or lack of user input) in the sensing region 120 directly by causing actions. Example actions include changing operation modes, as well as GUI actions such as cursor movement, selection, menu navigation, and other functions. In some embodiments, the processing system 110 provides information about the input (or lack of input) to some part of the electronic system (e.g. to a central processing system of the electronic system that is separate from the processing system 110, if such a separate central processing system exists). In some embodiments, some part of the electronic system processes information received from the processing system 110 to act on user input, such as to facilitate a full range of actions, including mode changing actions and GUI actions.

For example, in some embodiments, the processing system 110 operates the sensing element(s) of the input device 100 to produce electrical signals indicative of input (or lack of input) in the sensing region 120. The processing system 110 may perform any appropriate amount of processing on the electrical signals in producing the information provided to the electronic system. For example, the processing system 110 may merely digitize the electrical signals. As another example, the processing system 110 may perform filtering or other signal conditioning. As yet another example, the processing system 110 may subtract or otherwise account for a baseline, such that the information reflects a difference between the electrical signals and the baseline. As yet further examples, the processing system 110 may determine "positional information," recognize inputs as commands, recognize handwriting, and the like.

"Positional information" as used herein broadly encompasses absolute position, relative position, velocity, acceleration, and other types of spatial information. Various forms of positional information may also include time history components, as in the case of tracking motion over time. Exemplary "zero-dimensional" positional information includes near/far or contact/no contact information. Exemplary "one-dimensional" positional information includes positions along an axis. Exemplary "two-dimensional" positional information includes motions relative to a plane. Exemplary "three-dimensional" positional information includes velocities in space. Other examples include other dimensions and other representations of spatial information.

In some embodiments, the input device 100 is implemented with additional input components that are operated by the processing system 110 or by some other processing system. These additional input components may provide redundant functionality for input in the sensing region 120, or to provide some other functionality. FIG. 1 shows buttons 130 near the sensing region 120 that can be used to facilitate selection of items using the input device 100. Other types of additional input components include sliders, balls, wheels, switches, and the like. Conversely, in some embodiments, the input device 100 may be implemented with no other input components.

In some embodiments, the input device 100 comprises a touch screen interface, and the sensing region 120 overlaps at least part of an active area of a display screen. For example, the input device 100 may comprise substantially transparent sensor electrodes overlaying the display screen and provide a touch screen interface for the associated electronic system. The display screen may be any type of dynamic display capable of displaying a visual interface to a user, and may include any type of light emitting diode (LED), organic LED (OLED), cathode ray tube (CRT), liquid crystal display (LCD), plasma, electroluminescence (EL), or other display technology. The input device 100 and the display screen may share physical elements. For example, some embodiments may utilize some of the same electrical components for displaying and sensing. As another example, the display screen may be operated in part or in total by the processing system 110.

It should be understood that while many embodiments of the invention are to be described here in the context of a fully functioning apparatus, the mechanisms of the present invention are capable of being distributed as a program product (e.g., software) in a variety of forms. For example, the mechanisms of the present invention may be implemented and distributed as a software program on information bearing media that is readable by electronic processors (e.g., non-transitory computer-readable and/or recordable/writable information bearing media that is readable by the processing system 110). Additionally, the embodiments of the present invention apply equally regardless of the particular type of medium used to carry out the distribution. Examples of non-transitory, electronically readable media include various discs, memory sticks, memory cards, memory modules, and the like. Electronically readable media may be based on flash, optical, magnetic, holographic, or any other storage technology.

The following discussion often expressly refers to the processing system 110. However, it should be understood that such discussion is also applicable to systems other than the processing system 110. That is, systems other than the processing system 110 may implement the configurations and methods discussed either alone, with each other, or in conjunction with the processing system 110, and the like. Example other systems include the input device 100, other processing systems (e.g. processing systems of associated electronic systems, if such processing systems exist and are separate from the associated processing systems 110).

For example, if a method outlined below expressly refers to the processing system 110, an electronic system with the processing system 110 and a central processing system separate from the processing system 110 may perform part or all of the method using the central processing system. Any remaining parts of the method may be performed by the processing system 110, or by some other part of the electronic system.

FIG. 2 is a state diagram showing potential operation of the input device 100 of FIG. 1. FIG. 2 shows states as circles and transitions in state are shown as arrows connecting the circles. Events causing the transitions are named by the associated transitions. The processing system 110 is configured to operate in a first mode 210 and a second mode 220. In response to recognizing a characteristic object motion in the sensing region 120 as a Mode Changing Gesture 215 (e.g. an "Activation Gesture"), the processing system 110 changes from operating in the first mode 210 to operating in the second mode 220.

A sliding input comprises object motion (motion of one or more objects) with some amount of lateral movement. The sliding input may further comprise object motion with little or no lateral movement. For example, in some embodiments comprising an input surface contactable by the input objects 140 providing sliding input in the sensing region 120, sliding inputs comprise motion with components parallel to the input surface that are greater than a motion threshold. These sliding inputs may further comprise motion with components perpendicular to the input surface.

Sliding inputs recognized as pointing commands trigger one or more pointing actions, and are used to facilitate navigation and selection. Pointing actions move arrows, cursors, pointers, icons, highlighters, and the like across or through desktop images, menus, and other user interface components.

In some embodiments, the first mode 210 is a "Pointing Mode" and the second mode 220 is an "Enhanced Gesturing Mode." When operating in the Pointing Mode, the processing system 110 recognizes a first type of sliding input in the sensing region 120 as a first pointing command. That is, if the first type of sliding input is provided in the sensing region 120 when the processing system 110 is operating in the Pointing Mode, the processing system 110 would treat the first type of sliding input as a pointing command. In contrast, when operating in the Enhanced Gesturing Mode, the processing system 110 recognizes the first type of sliding input as a first gesture command of a plurality of gesture commands that it recognizes in the Enhanced Gesturing Mode; this plurality of gesture commands is associated with a plurality of different gesture actions. That is, if the first type of sliding input is provided in the sensing region 120 when the processing system 110 is operating in the Enhanced Gesturing Mode, the processing system 110 would treat the first type of sliding input as a gesture command instead of a pointing command. Thus, the first type of sliding input performed in the Pointing Mode causes a different outcome than the first type of sliding input performed in the Enhanced Gesturing Mode. For example, the first type of sliding input may have a "C" shape. This first type of sliding input may cause a cursor to move along a "C"-shaped path on a display in the Pointing Mode, and may cause an active application to close in the Enhanced Gesturing Mode.

In some embodiments, the processing system 110 further recognizes a second type of sliding input in the sensing region 120 as a second pointing command when operating in the Pointing Mode. And, the processing system 110 recognizes the second type of sliding input in the sensing region 120 as a second gesture command of the plurality of gesture commands that it recognizes in the Enhanced Gesturing Mode. The second gesture command is associated with a gesture action different from the gesture action associated with the first gesture commands. For example, the second type of sliding input may be a linear stroke beginning in a lower left portion and ending in an upper right portion of the sensing region 120. This second type of sliding input may cause the cursor to move toward the upper right on the display in the Pointing Mode, and may maximize or restore a display window in the Enhanced Gesturing Mode.

In various embodiments, the processing system 110 may recognize three, four, or more types of sliding inputs in the sensing region as pointing commands in the Pointing Mode and gesture commands in the Enhanced Gesturing Mode. These gesture commands may be associated with the same or different gesture actions.

Gesture commands and actions may be associated on a one-to-one, many-to-one, or one-to-many basis. Where multiple actions are associated with the same gesture command, which action results may be arbitrated by context or other appropriate criteria.

Additional examples of gesture commands include: two finger rotate for changing the orientation of an image; multiple-finger (e.g. two, three, four fingers) strokes to the left, right, up, or down, for application switching or for media controls (e.g. play/pause, stop, next, previous); two finger pinch or spread for zoom level adjustment; one-finger (or multi-finger) circular motion for scrolling; three finger pinch or spread for cut, copy, and paste; and three finger diagonal stroke for restoring a window.

Gesture commands can also be strung together in time to produce actions different from that of the individual gesture commands. For example, in some embodiments, a three finger pinch indicates copy, and a three finger diagonal upward stroke causes a window to maximize in size. A combination of a three finger pinch followed by a three finger diagonal upward stroke may share the selected item(s), such as by changing the security access of the item(s) or by posting them to a web site.

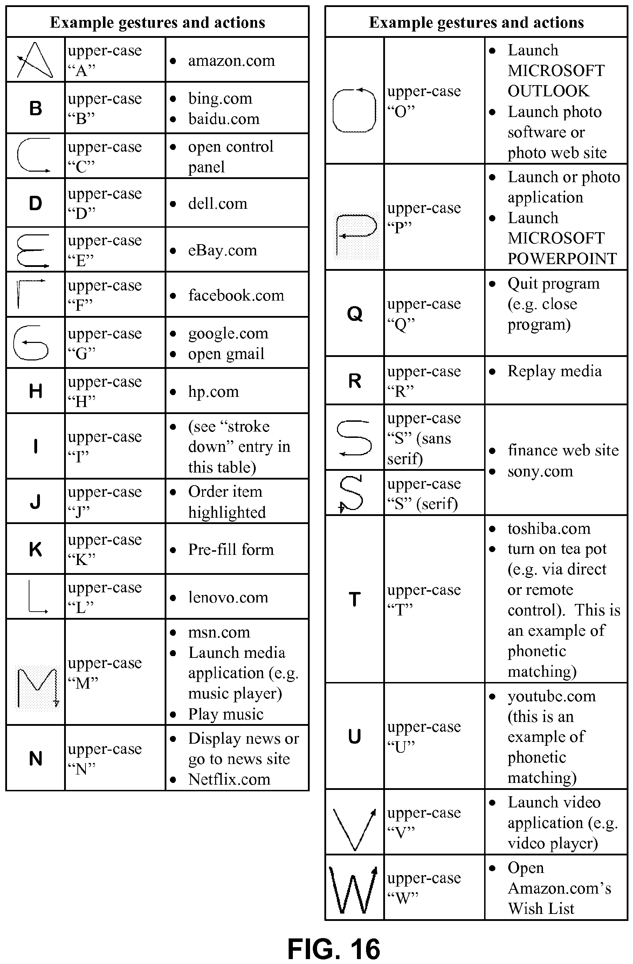

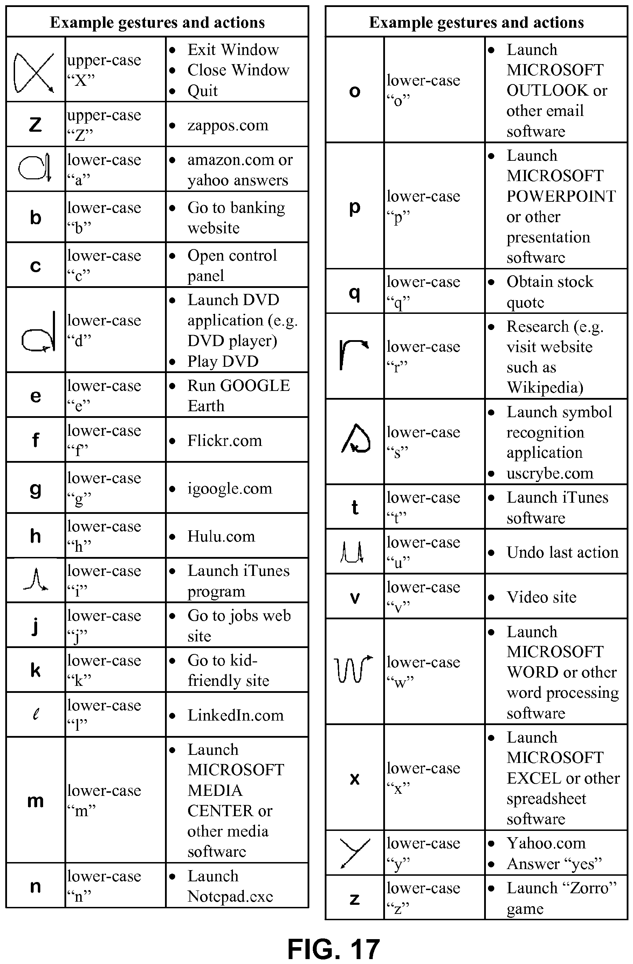

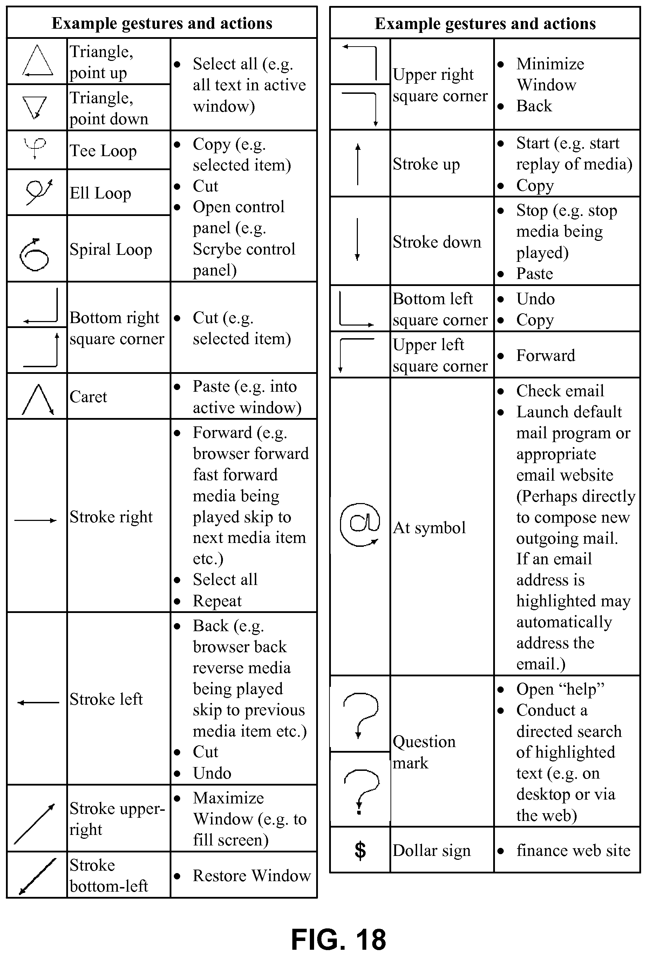

Turning now to FIGS. 16-18, a plurality of example gesture commands and example actions that may be implemented in various systems and methods are illustrated. For example, a system may be implemented such that a user motioning an "upper case 'X'" in the sensing region will generate an "Exit Window" action. As a second example, a user motioning a "lower case 'b'" in the sensing region will generate an action of going to a banking website.

Although the example gesture commands of Figures 16-18 are shown as associated with particular actions, the gesture commands may be associated with other actions (instead of or in addition to the example actions shown). Similarly, the example actions shown may be associated with other gesture commands (instead of or in addition to the gesture commands shown). Further, in various embodiments, the Enhanced Gesturing Mode may include none, some, or all of these examples. Where web sites are listed in the table as example actions, the action may be to navigate to the web site (e.g. in the current window or tab, or in a new window or tab), or to launch a web browser and navigate to the web site, as appropriate.

The Pointing Mode is directed primarily towards pointing actions, and has at least one type of gesture that is recognized as a pointing command. In various embodiments, a majority of input in the Pointing Mode results in pointing actions. In some embodiments, multiple different types of object motion (e.g. with different lengths, path directions, shapes, timing and the like) are associated with the same type of pointing command (e.g. cursor motion).

The Enhanced Gesturing Mode is directed primarily towards making more actions available to users through gesture commands, and has at least one type of gesture that is recognized as a gesture command. In various embodiments, a majority of input in the Enhanced Gesturing Mode results in gesture actions. In some embodiments, multiple different types of object motion (e.g., with different lengths, path directions, shapes, timing and the like) are associated with the different gesture commands (e.g., the examples described in this document).

Some electronic devices or input devices 100 accept input by multiple input objects 140 (multi-touch) for pointing commands and for gesture commands. With such devices, a mode switch may facilitate distinguishing between pointing and gesture commands. In some embodiments, a mode switch may enable the processing system 110 to support gesture commands that, without the mode switch, it would not support. For example, in some embodiments, the first type of sliding input may be a finger tracing an question mark ("?") on an input surface of the input device 100. This sliding input thus comprises a curved path followed by a tap. In the Pointing Mode, a finger drawing a question mark may cause cursor motion that first curves upwards to the right and then straight downwards (reflecting the curved path), and may also cause a simulated button click (resulting from the tap). While, in the Enhanced Gesturing Mode, a finger drawing a question mark may launch a help dialog or a directed search of highlighted text (e.g. on desktop or via the web). Thus, a mode switch could help differentiate different modes of input operation and desired actions. In some embodiments, with a mode switch to an Enhanced Gesturing Mode, the processing system 110 may be better able to differentiate customized gestures and/or character input from pointing operations.

In some embodiments, the processing system 110 recognizes some inputs as gesture commands in the Pointing Mode. However, the set of gesture commands recognized in the Pointing Mode differs from the set of gesture commands recognized in the Enhanced Gesturing Mode. Thus, an input that is treated as a gesture command in the Pointing Mode may be recognized as a different gesture command in the Enhanced Gesturing Mode.

In some embodiments, as shown in FIG. 2, the processing system 110 changes from operating in the second mode 220 to operating in the first mode 210 in response to a Mode Changing Event 225.

FIG. 3 is also a state diagram showing potential operation of the input device 100 of FIG. 1. FIG. 3 shows an alternate path from the second mode 220 to the first mode 210 for some embodiments. In FIG. 3, the processing system 110 switches from a first mode 210 to a second mode 220 in response to a Mode Changing Gesture 215, from the second mode 220 to a third mode 330 in response to an Event A 325, and from the third mode to the first mode 210 in response to an event B 335.

Although FIG. 2 shows two states (first mode 210 and second mode 220) and two paths (Mode Changing Gesture 215 and Mode Changing Event 225) between them, and although FIG. 3 shows three states with unidirectional paths between each pair of states, various embodiments of the invention can have any number of states and unidirectional or bidirectional paths.

The Mode Changing Gesture 215 comprises a characteristic object motion.

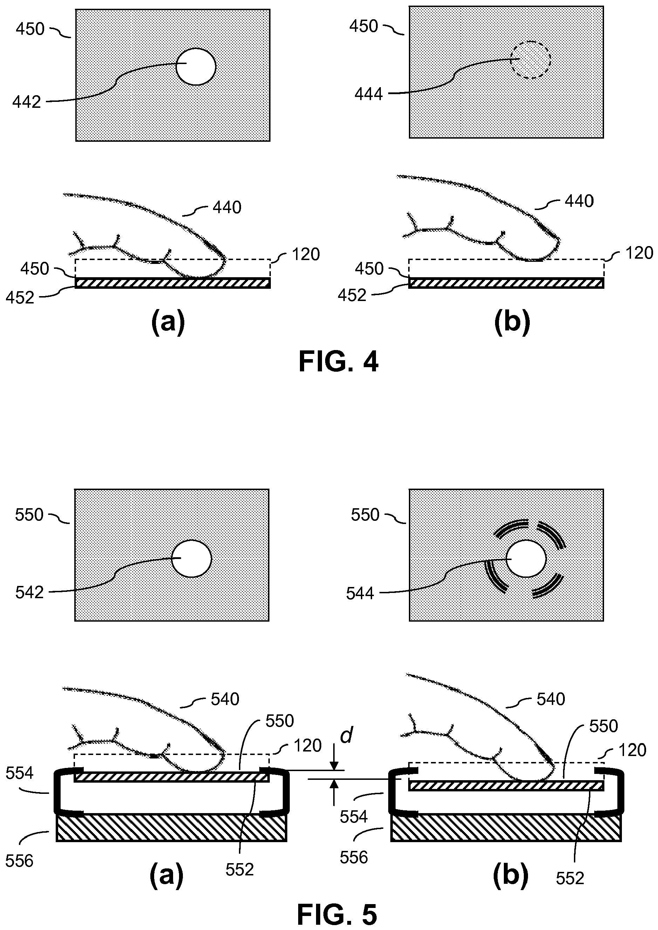

The Mode Changing Gesture 215 involves a change in contact state of one or more input objects 140. For example, useful for understanding the invention, FIG. 4(a) shows a finger 440 in contact with an input surface 450 of a component 452. The input surface 450 is configured to be contactable by the finger 440 when it is providing input in the sensing region 120. The component 452 may comprise a sensor substrate on which sensor electrodes are disposed. FIG. 4(a) uses a circle 442 to denote the contact of the finger 440 with the input surface 450.

Moving from FIG. 4(a) to FIG. 4(b), the finger 440 changes in contact state. Specifically, the finger 440 has lifted from the input surface 450, and is no longer in contact with the input surface 450. FIG. 4(a) denotes this non-contact state with a dashed circle 444. (FIG. 4(b) also shows the finger 440 as having exited the sensing region 120). FIG. 4(a) and FIG. 4(b) represent changing the contact state of the finger 440 from contact to no contact, (or vice versa).

FIG. 5(a) shows a finger 540 in contact with an input surface 550 of a component 552 found in some embodiments of the input device 100. The component 552 may be moved relative to other parts of the input device 100 (e.g., with respect to a bracket 554 and a base 556). The mechanical parts that physically couple the component 552 with the rest of the input device 100 and/or guide the movement of the component 552 are not shown. FIG. 5(a) and FIG. 5(b) represent changing the contact state of the finger 540. Specifically, the finger 540 has pressed on the input surface 550 to a greater extent in FIG. 5(b) than in FIG. 5(a), such that the input surface 550 has depressed by a distance d toward the base 556. FIG. 5(b) denotes the pressed (or pressed further) state with an emphasized circle 544.

The processing system 110 may consider the contact state of the finger 540 to have changed where the distance d is greater than an actuation distance associated with depression or other movement of the input surface 550. In accordance with the invention, this distance d is associated with the actuation of a switch such as a snap dome or tact switch. For example, some embodiments of the input device 100 comprise a switch configured to be actuated with sufficient movement of the input surface 550. Such embodiments include clickable touch sensors found in various commercial phones and laptops. In accordance with the invention, determining that a change in contact state occurred comprises determining actuation of the switch.

FIG. 5(a)-5(b) shows an embodiment where the component 552 translates to accommodate the depression of the input surface 550. In some embodiments, the input surface 550 moves at least partially through deformation or other reconfiguration of the component 552 or other components of the input device 100. As shown in FIGS. 5(a)-5(b) the sensing region 120 also has moved with the input surface 550. However, in some embodiments, the sensing region 120 does not move (or moves insubstantially) with the depression of the input surface 550. Also, in some embodiments, the sensing region 120 changes in shape with movement of the input surface 550.

FIGS. 5(a)-5(b) shows an embodiment where the processing system 110 determines a pressed contact state by detecting movement of the input surface 550. In some other examples, the processing system 110 determines a pressed contact state at least in part using other characteristics. For example, in some examples, the processing system 110 examines the magnitude of change in capacitive coupling(s), the contact area, the shape of contact area, the change in contact area, the force or pressure applied by the finger 540 (individually or in total with other input object(s)), a combination thereof, and the like. These characteristics may be detected by the same sensing element(s) as used to detect input in the sensing region 120 (perhaps even using the same signals received while detecting input in the sensing region 120), by other sensors (including switches), or a combination thereof.

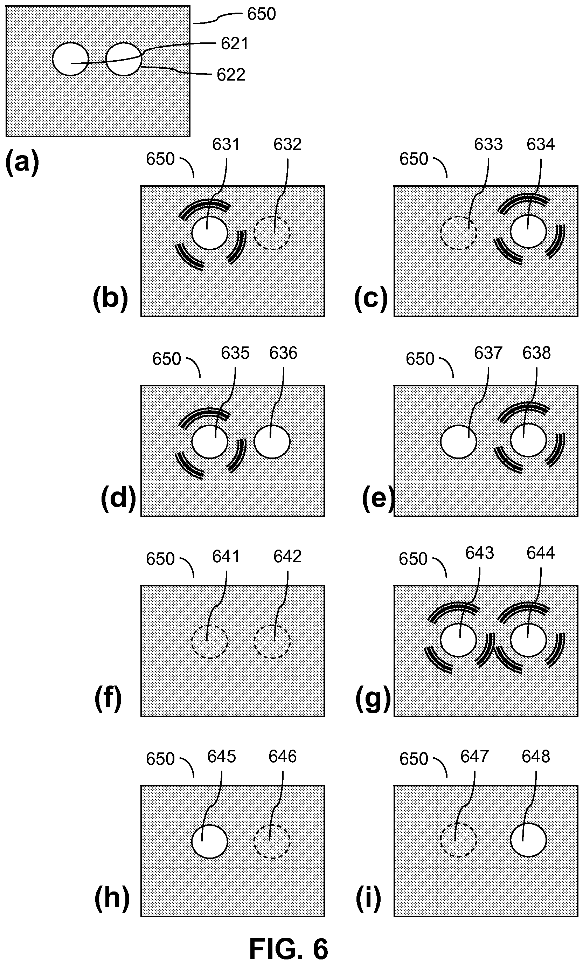

FIGS. 6(a)-(i) show examples of changes in contact state for two input objects on an input surface 650. Specifically, FIG. 6(a) shows a first contact state in which two input objects are in contact with (and not pressing on or pressing harder on) the input surface 650 (denoted by circles 621 and 622). Meanwhile, FIGS. 6(b)-6(i) show some example later contact states for the input objects, assuming no change in the number of input objects. FIGS. 6(b) and 6(c) show one input object in a pressed (or more pressed) state (denoted by emphasized circles 631 and 634) and another input object not in contact with the input surface 650 (denoted by dashed circles 632 and 633). FIGS. 6(d) and 6(e) show one input object in a pressed (or more pressed) state (denoted by emphasized circles 635 and 638) and another input object in contact with the input surface 650 but not in a pressed state (denoted by circles 636 and 637). FIG. 6(f) shows two input objects not in contact with the input surface 650 (denoted by dashed circles 641 and 642). FIG. 6(g) shows two input objects in pressed (or more pressed) states (denoted by emphasized circles 643 and 644). FIGS. 6(h) and 6(i) shows one input object in contact with (and not pressing on or pressing harder on) the input surface 650 (denoted by circles 645 and 648) and another input object not in contact with the input surface 650 (denoted by dashed circles 646 and 647).

FIG. 6(a) in combination with one or more FIGS. 6(b)-(i) shows only some example changes in contact state, and other types of changes in contact state are possible. For example, the starting contact state may be different. As another example, the number of input objects may not be two at both times. In such instances, other permutations are possible.

In accordance with the invention, recognizing characteristic object motion as the Mode Changing Gesture 215 comprises: determining that the object motion detected in the sensing region 120 comprises a plurality of input objects on an input surface, and determining that at least one of the plurality of input objects on the input surface changes its contact state. In accordance with the invention, the Mode Changing Gesture 215 comprises determining that at least one of the plurality of input objects changes its contact state multiple times.

In some other examples, useful for understanding the invention, the processing system 110 recognizes, as the Mode Changing Gesture 215, characteristic object motion comprising multiple input objects contacting an input surface one (or more) times. In recognizing object motion as the Mode Changing Gesture 215, the processing system 110 may also apply various criteria to input characteristics such as duration of time in contact/not in contact, distance from an input surface, force applied, and the like.

Some examples recognize multiple taps detected in series as the Mode Changing Gesture 215. For example, some examples may consider two, three, four, or more taps by a single input object as the Mode Changing Gesture 215. As another example, recognizing characteristic object motion as the Mode Changing Gesture 215 comprises determining that a plurality of input objects tap substantially simultaneously on the input surface once (or more times). A specific example may look for two input objects tapped twice on an input surface, and another example may look for three input objects tapped twice on an input surface. Yet another specific example may look for two input objects tapping an input surface followed by three input objects tapping the input surface, or vice versa. Thus, in various examples, the characteristic object motion recognized as Mode Switching Gesture 215 may comprise tapping of any combination of numbers and repetitions of input objects.

Some examples may place strict requirements on the contemporaneousness of the arrival of the input objects, or the departure of the input objects, or both. Other examples may not. For example, some examples accept input objects that arrive (or depart) within a specified time period to be "simultaneous." The specified time period may coincide with human perceptive ability, such that typical users do not perceive the arrival or departure times of the input objects to be distinct. In examples that specify time periods for both arrival and departure, these time periods may be of the same or different durations.

Some examples may monitor for the return of a single input object to the input surface to provide object motion that may be recognized as gesture commands. Some examples may monitor for the return of multiple (e.g. two, three, etc.) input objects. Some examples are agnostic to the number of returning input objects, and consider the next input provided in the sensing region 120 as a potential gesture command. In some examples, there is a time-out, such that input objects for providing the gesture command or the object motion that may be recognized as the gesture command must arrive within a time period (e.g. after the end of the characteristic object motion, after a beginning of the second mode, and the like).

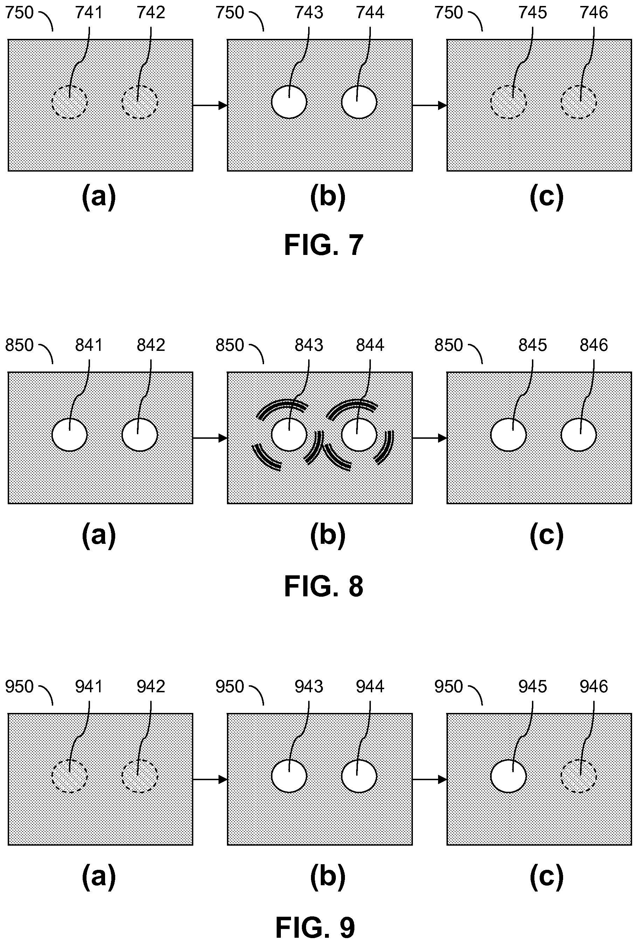

FIG. 7 shows two input objects providing such an example characteristic object motion that may be recognized as the Mode Changing Gesture in some examples. In FIG. 7(a), two input objects 140 are not in contact with an input surface 750 (denoted by dashed circles 741 and 742), although they may be in the sensing region 120. Then, as shown in FIG. 7(b), the input objects are in contact with the input surface 750 (denoted by circles 743 and 744). Then, as shown in FIG. 7(c), the input objects 140 are not in contact with the input surface 750 (denoted by dashed circles 745 and 746). This input sequence may be considered to comprise a single tap by two input objects.

While FIG. 7 shows a tap by two input objects, some examples monitor for taps by other numbers of input objects, including two, three, and four input objects. Some examples monitor for taps by particular input objects 140, such as a whole hand, perhaps combined with some numbers of fingers.

Also, while FIG. 7 shows two input objects oriented in such a way that they align with a longer edge of the input surface 750, that orientation may or may not be considered in determining whether particular input comprises characteristic object motion (that is recognized as a Mode Changing Gesture 215). For example, some examples may examine the alignment of the input objects, and require that they be aligned with a longer or a shorter edge of an input surface (or some other feature), while some examples may examine the distance between the input objects, the type of the input objects, the orientation of the input objects, and the like. Other examples respond similarly, or do not respond differently, to such variations.

As another example, recognizing characteristic object motion as the Mode Changing Gesture 215 may comprise determining that one or more input objects (of multiple input objects contacting an input surface) substantially simultaneously depress or press harder on the input surface. FIG. 8 shows two input objects providing such a characteristic object motion. In FIG. 8(a), two input objects are in contact with, and not sufficiently pressing, an input surface 850 (denoted by circles 841 and 842). Then, as shown in FIG. 8(b), the input objects 140 press on the input surface 850 (denoted by emphasized circles 843 and 844). Then, as shown in FIG. 8(c), the input objects are in contact with, and not pressing, the input surface 850 (denoted by circles 845 and 846).

As further examples, the change in contact state comprises at least one of the plurality of input objects on the input surface (and not all of the plurality of input objects on the input surface) lifting from the input surface. In such examples, recognizing characteristic object motion as the Mode Changing Gesture 215 may comprise determining that a first subset of the plurality of input objects previously on an input surface has lifted from the input surface, while a second subset of the plurality of input objects remain on the input surface. The first and second subsets are non-empty, proper subsets of the plurality of input objects, such that each subset contains at least one (and not all) of the input objects of the plurality of input objects. In other words, in such examples, recognizing characteristic object motion as the Mode Changing Gesture 215 may comprise determining that at least one of a plurality of input objects previously on an input surface has lifted from the input surface, while at least another one of the plurality of input objects remains on the input surface. FIG. 9 shows two input objects 140 providing such characteristic object motion.

In the example of FIG. 9(a), two input objects are not in contact with an input surface 950 of the input device 100 (denoted by dashed circles 941 and 942), although they may be in the sensing region that extends from the input surface 950. Then, as shown in FIG. 9(b), the input objects are in contact with the input surface 950 (denoted by circles 943 and 944). Then, as shown in FIG. 9(c), one of the input objects is in contact with the input surface 950 (denoted by circle 945) and one of the input objects is not in contact with the input surface 950 (denoted by dashed circle 946).

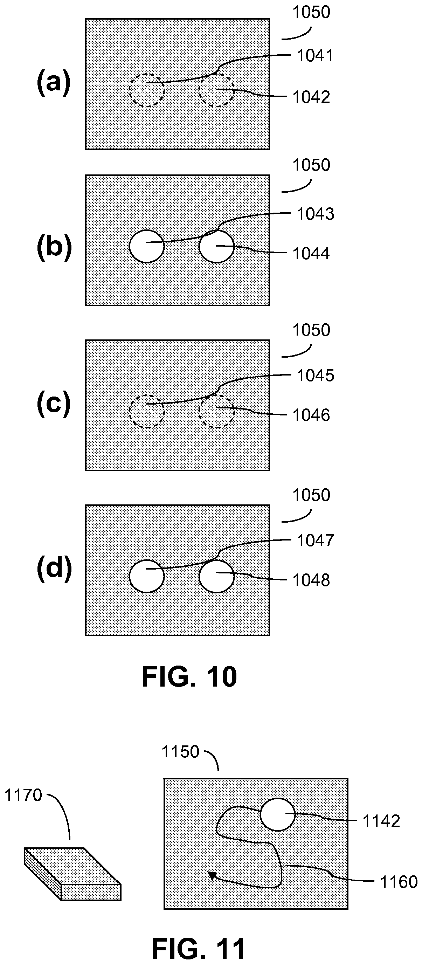

As yet another example, recognizing characteristic object motion as the Mode Changing Gesture 215 may comprise determining that a plurality of input objects substantially simultaneously touches, lifts from, and retouches an input surface. FIG. 10 shows two input objects providing such a sequence. In FIG. 10(a), two input objects are not in contact with an input surface 1050 of the input device 100 (denoted by dashed circles 1041 and 1042), although they may be in the sensing region 120 that extends from the input surface 1050. Then, as shown in FIG. 10(b), the input objects are in contact with the input surface 1050 (denoted by circles 1043 and 1044). Then, as shown in FIG. 10(c), the input objects are not in contact with the input surface 1050 (denoted by dashed circles 1045 and 1046). Then, as shown in FIG. 10(d), the input objects are again in contact with the input surface 1050 (denoted by circles 1047 and 1048).

In some examples, recognizing the characteristic object motion as the Mode Changing Gesture 215 may comprise detecting that the characteristic object motion occurs substantially simultaneously with actuation of one or more physical function switches, such as buttons or keypad keys. FIG. 11 shows one input object providing an example of such a sequence. In FIG. 11, while a key 1170 is actuated, an input object in contact with an input surface 1150 traces out an "S" (denoted by circle 1142 and path 1160).

Some examples may recognize the characteristic object motion as the Mode Changing Gesture 215 if it is coupled with the pressing of one or more keys specifically associated with the Mode Changing Gesture 215, the first mode 210, and/or the second mode 220. Some examples may monitor for the pressing of multiple keys not specific to the Mode Changing. The keys may be part of or separate from the input device 100.

For example, the input device 100 may be used in conjunction with a standard keyboard, and the characteristic object motion may be recognized as the Mode Changing Gesture 215 if the <shift> and <ctrl> keys are actuated at the same time as the provision of the characteristic object motion. Other examples may monitor for the pressing of function keys coupled with characteristic object motion detected by the input device 100 (e.g. <control>-<alt> accompanied by a tap or a traced "S" on an input surface of the input device 100).

Returning now to FIGS. 2-3, the events that cause the processing system 110 to change from the second mode 220 (e.g. the Mode Changing Event 225 or Event A 325) to another mode (e.g. the first mode 210 or the third mode 230) may comprise any of a variety of events. For example, in some embodiments, the processing system 110 is configured to change from operating in the second mode 220 in response to a termination event, such as recognizing a subsequent object motion as a termination command. As used in this document, a "subsequent object motion" occurs in the sensing region 120 at least partially after the characteristic object motion that is recognized as the Mode Changing Gesture 215. The termination event may comprise any appropriate user input (or lack of user input), including any of the alternatives described for the Mode Changing Gesture 215, user input outside of the sensing region 120, and time-outs. In some embodiments with termination events comprising time-outs after an input, additional input causes continued operation in the second mode 220 until a termination event fully occurs. For example, in some embodiments, a termination event comprises a time-out after a removal of input objects from the sensing region 120, and new presences of input objects in the sensing region 120 during the time-out interval resets the time out; this stops the processing system 110 from switching out of the second mode 220 until a time-out after another removal.

The termination command may be the same as or be different from the characteristic object motion recognized as the Mode Changing Gestures 215. For example, the termination command may comprise object motions that match the characteristic object motions recognized as Mode Changing Gestures 215 (e.g. both the termination command and the characteristic object motion are three touches of short duration by three input objects). As another example, the termination command may comprise object motion that is similar to, but different from, from the characteristic object motion recognized as Mode Changing Gesture 215 (e.g. both involve two touches of by two input objects, but the Mode Changing Gesture 215 comprises a touch of shorter duration followed by a touch of longer duration, and the termination command comprises a touch of longer duration followed by a touch of shorter duration). As yet another example, the termination command may comprise object motion that is clearly different from the characteristic object motion recognized as the Mode Changing Gesture 215 (e.g. involving different numbers, sequences, motion, and the like, of input objects in the sensing region 120).

As another example, in some embodiments, the processing system 110 is configured to change from operating in the second mode 220 in response to detecting an end of a subsequent object motion. Any appropriate methodology can be applied to determine the end of an object motion, and some examples are highlighted here. In some embodiments, the end of an object motion comprises the input object(s) providing the object motion exiting or being outside of the sensing region 120. In some embodiments, the end of object motion comprises the input object(s) providing the object motion lifting from, sliding out of, or otherwise moving away from an input surface or the sensing region 120 (and not necessarily exiting the sensing region 120). In some embodiments, the end of object motion comprises the input object(s) providing the object motion making a sharp change in position, velocity, and/or acceleration. In some embodiments, the end of object motion comprises the input object(s) providing the object motion
staying relatively stationary for more than a reference amount of time. The input object(s) may be considered relatively stationary when they change in position less than a reference amount, when they do not move past a reference distance from a prior position, when they exhibit speeds of less than a reference speed, and the like.

As another example, in some embodiments, the processing system 110 is configured to change from operating in the second mode 220 in response to recognizing a subsequent sliding input as one of a plurality of gesture commands. In some embodiments, recognizing the subsequent sliding input as any of the gesture commands recognized in the second mode 220 would switch the processing system 110 from operating in the second mode 220. In some embodiments, recognizing the subsequent sliding input as one of a particular subset of the gesture commands recognized in the second mode 220 would switch the processing system 110 from operating in the second mode 220.

As yet another example, in some embodiments, the processing system 110 is configured to change from operating in the second mode 220 in response to a passage of a predetermined amount of time. The predetermined amount of time may be referenced from any appropriate reference, such as when the processing system 110 detects the characteristic object motion that is recognized as the Mode Changing Gesture 215, when the processing system 110 recognizes the characteristic object motion as the Mode Changing Gesture 215, and when the processing system 110 begins operating in the second mode 220, at a beginning, middle, or end of a first sliding input that occurs in the second mode 220. In various embodiments, the predetermined amount of time may be determined at any appropriate time before the start of the passage of the predetermined amount of time. Examples include: at manufacture, at start-up or coming out of a low-power state, at log-in or other security validation, and at changing to the second mode 220. The predetermined amount of time may also be changeable, such as in response to environmental conditions, operating status, user preferences, and input history.

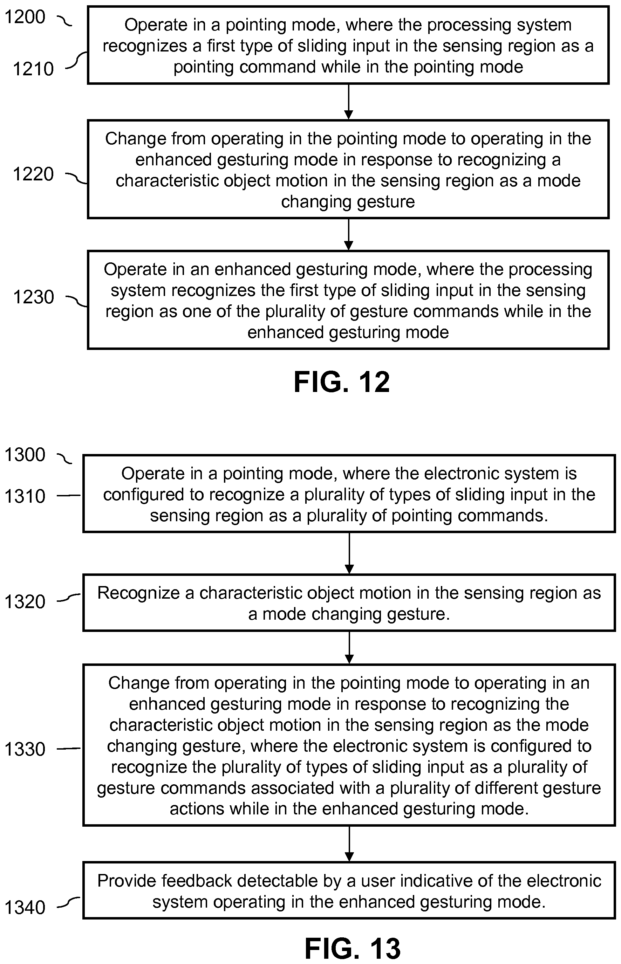

FIGS. 12-14 are flow charts showing exemplary methods of operation of the input device 100 of FIG. 1 configured to operate in multiple modes (such as the modes of FIGS. 2 and 3), in accordance with embodiments of the invention. Although FIGS. 12-14 shows specific steps, some embodiments may have a subset of the steps shown, other steps in addition, or both. Also, although FIGS. 12-14 show a particular ordering of the steps, some embodiments have the same or different steps in different orders. Further, as noted above, although the discussion below often expressly refers to the processing system, the discussion applies to any appropriate system.

In reference to FIG. 12, an example method 1200 in accordance with the invention comprises the following. In a first step 1210, a processing system operates in a Pointing Mode, where the processing system recognizes a first type of sliding input in the sensing region as a pointing command while in the Pointing Mode. In a second step 1220, the processing system changes from operating in the Pointing Mode to operating in an Enhanced Gesturing Mode in response to recognizing a characteristic object motion in the sensing region as a Mode Changing Gesture 215. In a third step 1230, the processing system operates in the Enhanced Gesturing Mode. When operating in the Enhanced Gesturing Mode, the processing system recognizes the first type of sliding input in the sensing region as one of the plurality of gesture commands that it recognizes in the Enhanced Gesturing Mode; the plurality of gesture commands is associated with a plurality of different gesture actions.

FIG. 13 shows an example method 1300 for operating embodiments comprising a display screen, in accordance with the invention. The display screen is configured to provide a visual display in an active area of the display screen. The method 1300 comprises the following. In a first step 1310, an electronic system (or a processing system) operates in a Pointing Mode. While in the Pointing Mode, the electronic system (or the processing system) recognizes a plurality of types of sliding input in the sensing region as pointing commands. The pointing commands may be for interacting with the visual display while in the pointing mode, such as for causing motion of display elements in various directions. In a second step 1320, the electronic system (or the processing system) recognizes a characteristic object motion in the sensing region as a Mode Changing Gesture. In a third step 1330, the electronic system (or the processing system) changes from operating in the Pointing Mode to operating in an Enhanced Gesturing Mode in response to recognizing the characteristic object motion in the sensing region as the Mode Changing Gesture. While in the Enhanced Gesturing Mode, the electronic system (or the processing system) recognizes the plurality of types of sliding input as a plurality of gesture commands associated with a plurality of different gesture actions. In a fourth step 1340, the electronic system (or the processing system) provides feedback detectable by a user indicative of operation in the Enhanced Gesturing Mode.

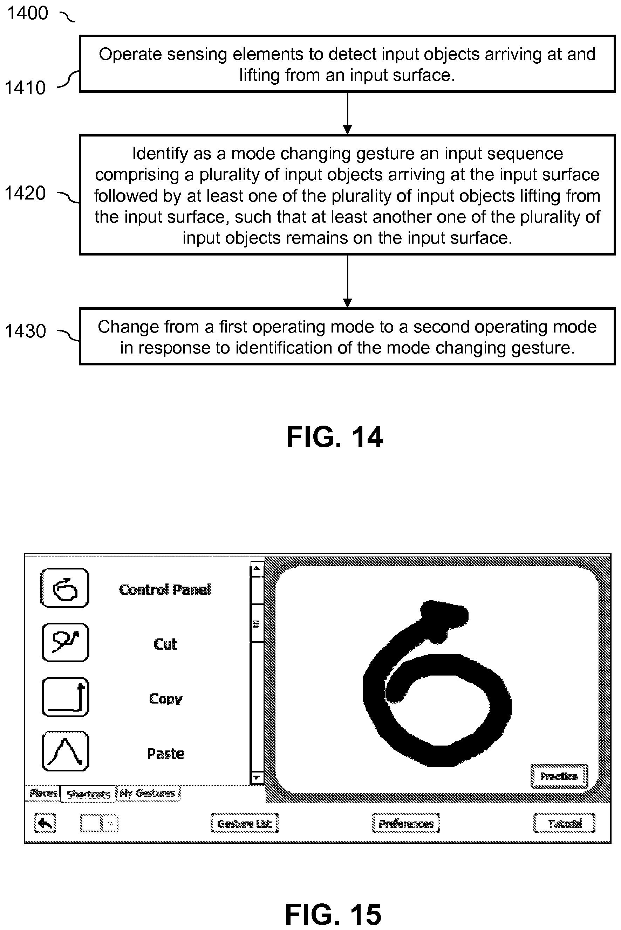

FIG. 14 shows an example method 1400 for using examples comprising an input surface configured to be contacted by input objects. Although discussed specifically in connection with an input device, these steps may also be applied to other devices, such as an electronic system that is integrated with or communicates with the input device. Also, the input device may accomplish these steps via a processing system of the input device. In step 1410, an input device operates its sensing element(s) to detect input objects arriving at and lifting from the input surface. In step 1420, the input device identifies a characteristic object motion as a Mode Changing Gesture. The characteristic object motion comprises a set of input objects arriving at the input surface followed by a first subset of the set of input objects lifting from the input surface, such that a second subset of the set of input objects remains on the input surface. The first and second subsets are both non-empty, proper subsets of the set of input objects that arrived at the input surface. In step 1430, the input device changes from a first operating mode (e.g. first mode 210) to a second operating mode (e.g. second mode 220) in response to identification of the characteristic object motion as the Mode Changing Gesture.

Thus, some examples recognize characteristic object motion as the Mode Changing Gesture 215 if it comprises a multitude of input objects (e.g. fingers) being placed on an input surface of an input device, followed by one or more of the input objects lifting from the input surface.

In some examples of the method 1400, the input device detects an end to an object motion by detecting that the one (or more) input object has stopped moving for some duration, has moved away from the surface, etc. Time-outs may also be used in some examples, such that an action or mode change triggered by the end to the object motion is confirmed and occurs some time after removal.

In some examples of the method 1400, the input device accepts a plurality of gesture commands while in the second operating mode, and may perform the following while in the second operating mode (and not while in the first operating mode). The input device may identify subsequent object motion of one (or more) of the second subset of input objects as one of the plurality of gesture commands accepted in the second operating mode.

In some examples, the input device changes modes from the second operating mode after all input objects have lifted from the input surface, (e.g. after the remaining input objects have been removed from the surface for a period of time). In examples with time-outs, a return of one or more input objects before the time-out may cause a continuation of the second operating mode. In some examples, the input device provides an output indicative of the change from the second operating mode.

In some examples of the method 1400, the characteristic object motion (that is recognized as the Mode Changing Gesture 215) comprises particular numbers of input objects arriving and lifting from the input surface. For example, the input device may accept M input objects arriving at the input surface and N input objects lifting from the input surface, where M minus N is one (so the number of input objects lifting from the input surface is one fewer than the plurality of input objects arriving at the input surface), is two (so the number of input objects lifting from the input surface is two fewer than the plurality of input objects arriving at the input surface), and the like. As an example with specific numbers, M may be 3, and N may be 2, such that M minus N is one. Another example with specific numbers recognizes that a user has placed two input objects down simultaneously on an input surface, and then lifted one.

As another example, the input device may accept N input objects arriving at the input surface followed by one input object lifting (resulting in one fewer than N input objects remaining on the input surface).

The methods 1200, 1300, or 1400 may further comprise any number of additional steps. For example, some methods further comprise providing one or more outputs indicative of a change in operating mode (e.g. from the first operating mode to the second operating mode, from the second operating mode to another mode, etc.). Such outputs may indicate the mode change to other systems, provide feedback to the user about the operational mode (e.g. the first mode 210, the second mode 220, etc.), or both. The feedback may comprise visual feedback, aural feedback, tactile feedback, or a combination thereof. As yet another example, some methods further comprise moving a graphical element on a visual display in response to recognizing a first type of sliding input in the sensing region as a pointing command.

The change in operating modes may not be visually indicated to users, or may be indicated in any variety of ways. For example, the pointer icon, the background color, display brightness, or some other visual element or characteristic may change in response to a mode switch. The indication may differ depending on the mode switched from or the mode switched to. As another example, a visual element or characteristic may be associated with the active operating mode, such that a particular pointer or background color is presented in a particular mode. Non-visual feedback, such as aural or tactile feedback, may complement visual feedback.

Some embodiments may launch applications or display windows specifically for use in one of the modes. FIG. 15 shows an example screen indicating an Enhanced Gesturing Mode.

The embodiments and examples set forth herein were presented in order to best explain the present invention and its particular application and to thereby enable those skilled in the art to make and use the invention. However, those skilled in the art will recognize that the foregoing description and examples have been presented for the purposes of illustration and example only. The description as set forth is not intended to be exhaustive or to limit the invention to the precise form disclosed.

## Claims

1. An input device (100) comprising:
a sensing element configured to detect object motion in a sensing region (120); and
a processing system (110) coupled to the sensing element, the processing system configured to:
operate in a pointing mode (210), wherein the processing system (110) recognizes a first type of sliding input in the sensing region (120) as a first pointing command while in the pointing mode (210);
operate in an enhanced gesturing mode (220), wherein the processing system (110) recognizes a plurality of gesture commands associated with a plurality of different gesture actions while in the enhanced gesturing mode (220), and wherein the processing system (110) recognizes the first type of sliding input in the sensing region (120) as a first gesture command of the plurality of gesture commands while in the enhanced gesturing mode (220); and
change from operating in the pointing mode (210) to operating in the enhanced gesturing mode (220) after recognizing a characteristic object motion in the sensing region (120) as a mode changing gesture (215), the mode changing gesture (215) comprising at least one input object (140) of a plurality of input objects (140) changing in contact state multiple times, wherein the changing in contact state is with respect to an input surface (550);
wherein the processing system (110) is configured to recognize the characteristic object motion in the sensing region (120) as the mode changing gesture (215) by determining that the plurality of input objects (140) are on the input surface (550) and that the at least one input object (140) has actuated a switch by depressing the input surface (550), the depressing of the input surface (550) being said changing in contact state.

2. The input device of claim 1, wherein the processing system (110) is configured to recognize a second type of sliding input in the sensing region (120) as a second pointing command while in the pointing mode (210), wherein the processing system (110) is configured to recognize the second type of sliding input in the sensing region (120) as a second gesture command of the plurality of gesture commands while in the enhanced gesturing mode (220), and wherein the first gesture command and the second gesture command are associated with different gesture actions.

3. The input device of claim 1, wherein the processing system (110) is further configured to change from the enhanced gesturing mode (220) to the pointing mode (210) in response to detecting an end of a subsequent object motion, the subsequent object motion occurring in the sensing region (120) after the characteristic object motion.

4. The input device of claim 1, wherein the processing system (110) is further configured to:
change from operating in the enhanced gesturing mode (220) to operating in the pointing mode (210) in response to recognizing a subsequent sliding input as a gesture command of the plurality of gesture commands, the subsequent sliding input occurring in the sensing region (120) after the characteristic object motion.

5. The input device of claim 1, wherein the processing system (110) is further configured to change from operating in the enhanced gesturing mode (220) to operating in the pointing mode (210) in response to at least one of:
recognizing a subsequent object motion as a termination command, the subsequent object motion occurring in the sensing region (120) after the characteristic object motion; and
a passage of a predetermined amount of time.

6. A method of operating an electronic system comprising a proximity sensor device (100) configured to detect object motion in a sensing region (120) and a display screen configured to provide a visual display, the method comprising:
operating (1310) in a pointing mode (210), wherein the electronic system (100) is configured to recognize a plurality of types of sliding input in the sensing region (120) as pointing commands for interacting with the visual display while in the pointing mode (210);
recognizing (1320), while operating in the pointing mode (210), a characteristic object motion in the sensing region (120) as a mode changing gesture (215), the mode changing gesture (215) comprising at least one input object of a plurality of input objects (140) changing in contact state multiple times, wherein the changing in contact state is with respect to an input surface (550); and
changing (1330) from operating in the pointing mode (210) to operating in an enhanced gesturing mode (220) after the recognizing the characteristic object motion in the sensing region (120) as the mode changing gesture (215), wherein the electronic system is configured to recognize the plurality of types of sliding input as a plurality of gesture commands associated with a plurality of different gesture actions while in the enhanced gesturing mode (220);
wherein recognizing the characteristic object motion in the sensing region (120) as the mode changing gesture (215) comprises determining that the plurality of input objects (140) are on the input surface (550) and that the at least one input object (140) has actuated a switch by depressing the input surface (550), the depressing of the input surface (550) being said changing in contact state.

7. The method of claim 6, further comprising:
recognizing a first type of the plurality of types of sliding input in the sensing region (120) as a first pointing command while operating in the pointing mode (210); and
moving a graphical element in the visual display in response to the recognizing the first type of sliding input in the sensing region (120) as the first pointing command.

8. A processing system comprising:
sensing circuitry configured to detect object motion in a sensing region (120); and
processing circuitry (110) configured to:
operate in a pointing mode (210), wherein the processing circuitry (110) recognizes a first type of sliding input in the sensing region (120) as a first pointing command while in the pointing mode (210);
operate in an enhanced gesturing mode (220), wherein the processing circuitry (110) recognizes a plurality of gesture commands associated with a plurality of different gesture actions while in the enhanced gesturing mode (220), and wherein the processing circuitry (110) recognizes the first type of sliding input in the sensing region (120) as a first gesture command of the plurality of gesture commands while in the enhanced gesturing mode (220); and
change from operating in the pointing mode (210) to operating in the enhanced gesturing mode (220) after recognizing a characteristic object motion in the sensing region (120) as a mode changing gesture (215), the mode changing gesture (215) comprising at least one input object (140) of a plurality of input objects (140) changing in contact state multiple times, wherein the changing in contact state is with respect to an input surface (550);
wherein recognizing the characteristic object motion in the sensing region (120) as the mode changing gesture (215) comprises determining that the plurality of input objects (140) are on the input surface (550) and that the at least one input object (140) has actuated a switch by depressing the input surface (550), the depressing of the input surface (550) being said changing in contact state.

## Patentansprüche

1. Eingabevorrichtung (100), die Folgendes umfasst:
ein Erfassungselement, das dafür konfiguriert ist, eine Objektbewegung in einem Erfassungsbereich (120) zu erfassen; und
ein Verarbeitungssystem (110), das mit dem Erfassungselement gekoppelt ist, wobei das Verarbeitungssystem für Folgendes konfiguriert ist:
Arbeiten in einem Zeigemodus (210), wobei das Verarbeitungssystem (110) einen ersten Typ von Gleiteingabe in der Erfassungsregion (120) als einen ersten Zeigebefehl erkennt, während es sich im Zeigemodus (210) befindet;
Arbeiten in einem erweiterten Gestenmodus (220), wobei das Verarbeitungssystem (110) eine Vielzahl von Gestenbefehlen erkennt, die einer Vielzahl von verschiedenen Gestenaktionen zugeordnet sind, während es sich in dem erweiterten Gestenmodus (220) befindet, und wobei das Verarbeitungssystem (110) den ersten Typ der Gleiteingabe in der Erfassungsregion (120) als einen ersten Gestenbefehl der Vielzahl von Gestenbefehlen erkennt, während es sich in dem erweiterten Gestenmodus (220) befindet; und
Wechseln von Betrieb im Zeigemodus (210) zu Betrieb im erweiterten Gestenmodus (220) nach dem Erkennen einer Bewegung eines charakteristischen Objekts in dem Erfassungsbereich (120) als Moduswechselgeste (215), wobei die Moduswechselgeste (215) mindestens ein Eingabeobjekt (140) einer Vielzahl von Eingabeobjekten (140) umfasst, die mehrmals den Kontaktzustand wechseln, wobei sich der Wechsel des Kontaktzustands auf eine Eingabeoberfläche (550) bezieht;
wobei das Verarbeitungssystem (110) dafür konfiguriert ist, die Bewegung des charakteristischen Objekts in dem Erfassungsbereich (120) als Moduswechselgeste (215) zu erkennen, indem bestimmt wird, dass sich die Vielzahl von Eingabeobjekten (140) auf der Eingabeoberfläche (550) befindet und dass das mindestens eine Eingabeobjekt (140) einen Schalter durch Drücken der Eingabeoberfläche (550) betätigt hat, wobei es sich beim Drücken der Eingabefläche (550) um den genannten Wechsel des Kontaktzustands handelt.

2. Eingabevorrichtung nach Anspruch 1, wobei das Verarbeitungssystem (110) dafür konfiguriert ist, einen zweiten Typ von Gleiteingabe in der Erfassungsregion (120) als einen zweiten Zeigebefehl zu erkennen, während es sich im Zeigemodus (210) befindet; wobei das Verarbeitungssystem (110) dafür konfiguriert ist, den zweiten Typ der Gleiteingabe in der Erfassungsregion (120) als einen zweiten Gestenbefehl der Vielzahl von Gestenbefehlen zu erkennen, während es sich in dem erweiterten Gestenmodus (220) befindet, und wobei der erste Gestenbefehl und der zweite Gestenbefehl verschiedenen Gestenaktionen zugeordnet sind.

3. Eingabevorrichtung nach Anspruch 1, wobei das Verarbeitungssystem (110) ferner dafür konfiguriert ist, als Reaktion auf das Erfassen eines Endes einer nachfolgenden Objektbewegung von dem erweiterten Gestenmodus (220) in den Zeigemodus (210) zu wechseln, wobei die nachfolgende Objektbewegung in dem Erfassungsbereich (120) nach der Bewegung des charakteristischen Objekts auftritt.

4. Eingabevorrichtung nach Anspruch 1, wobei das Verarbeitungssystem (110) ferner für Folgendes konfiguriert ist:
als Reaktion auf das Erkennen einer nachfolgenden Gleiteingabe als Gestenbefehl der Vielzahl von Gestenbefehlen, Wechseln von einem Betrieb in dem verbesserten Gestenmodus (220) zu einem Betrieb im Zeigemodus (210), wobei die nachfolgende Gleiteingabe in dem Erfassungsbereich (120) nach der Bewegung des charakteristischen Objekts auftritt.

5. Eingabevorrichtung nach Anspruch 1, wobei das Verarbeitungssystem (110) des Weiteren dafür konfiguriert ist, vom Betrieb im erweiterten Gestenmodus (220) in den Zeigemodus (210) als Reaktion auf mindestens eines von Folgendem zu wechseln:
Erkennen einer nachfolgenden Objektbewegung als Beendigungsbefehl, wobei die nachfolgende Objektbewegung in dem Erfassungsbereich (120) nach der Bewegung des charakteristischen Objekts auftritt; und
Ablauf einer vorbestimmten Zeitspanne.

6. Verfahren zum Betreiben eines elektronischen Systems, das Folgendes umfasst: eine Näherungssensorvorrichtung (100), die zum Erfassen einer Objektbewegung in einem Erfassungsbereich (120) konfiguriert ist, und einen Anzeigebildschirm, der zum Bereitstellen einer visuellen Anzeige konfiguriert ist, wobei das Verfahren Folgendes umfasst:
Arbeiten (1310) in einem Zeigemodus (210), wobei das elektronische System (100) dafür konfiguriert ist, eine Vielzahl von Arten von Gleiteingaben in dem Erfassungsbereich (120) als Zeigebefehle zum Interagieren mit der visuellen Anzeige zu erkennen, während sie sich im Zeigemodus (210) befindet;
Erkennen (1320) einer charakteristischen Objektbewegung im Erfassungsbereich (120) während einer Betriebsart im Zeigermodus (210) als Moduswechselgeste (215), wobei die Moduswechselgeste (215) mindestens ein Eingabeobjekt einer Vielzahl von Eingabeobjekten (140) umfasst, die mehrmals ihren Kontaktzustand wechseln, wobei sich der Wechsel des Kontaktzustands auf eine Eingabeoberfläche (550) bezieht; und
Wechseln (1330) vom Betrieb in dem Zeigemodus (210) zum Betrieb in einem erweiterten Gestenmodus (220) nach dem Erkennen der Bewegung des charakteristischen Objekts in dem Erfassungsbereich (120) als Moduswechselgeste (215), wobei das elektronische System dafür konfiguriert ist, die Vielzahl von Arten von Gleiteingaben als eine Vielzahl von Gestenbefehlen zu erkennen, die zu einer Vielzahl von erweiterten Gestenaktionen gehören, während es sich im erweiterten Gestenmodus befindet (220);
wobei das Erkennen der Bewegung des charakteristischen Objekts in dem Erfassungsbereich (120) als Moduswechselgeste (215) das Bestimmen umfasst, dass sich die Vielzahl von Eingabeobjekten (140) auf der Eingabeoberfläche (550) befindet und dass das mindestens eine Eingabeobjekt (140) einen Schalter durch Drücken der Eingabeoberfläche (550) betätigt hat, wobei es sich beim Drücken der Eingabefläche (550) um den genannten Wechsel des Kontaktzustands handelt.

7. Verfahren nach Anspruch 6, das ferner Folgendes umfasst:
Erkennen eines ersten Typs der Mehrzahl von Gleiteingabetypen in dem Erfassungsbereich (120) als einen ersten Zeigebefehl, während er in dem Zeigemodus (210) arbeitet; und
Bewegen eines graphischen Elements in der visuellen Anzeige als Reaktion auf das Erkennen des ersten Typs von Gleiteingabe in dem Erfassungsbereich (120) als ersten Zeigebefehl.

8. Verarbeitungssystem, das Folgendes umfasst:
einen Erfassungsschaltkreis, der dafür konfiguriert ist, eine Objektbewegung in einem Erfassungsbereich (120) zu erfassen; und einen Verarbeitungsschaltkreis (110), der für Folgendes konfiguriert ist:
Arbeiten in einem Zeigemodus (210), wobei der Verarbeitungsschaltkreis (110) einen ersten Typ von Gleiteingabe in der Erfassungsregion (120) als einen ersten Zeigebefehl erkennt, während er sich im Zeigemodus (210) befindet;
Arbeiten in einem erweiterten Gestenmodus (220), wobei der Verarbeitungsschaltkreis (110) eine Vielzahl von Gestenbefehlen erkennt, die einer Vielzahl von verschiedenen Gestenaktionen zugeordnet sind, während er sich in dem erweiterten Gestenmodus (220) befindet, und wobei der Verarbeitungsschaltkreis (110) den ersten Typ der Gleiteingabe in der Erfassungsregion (120) als einen ersten Gestenbefehl der Vielzahl von Gestenbefehlen erkennt, während er sich in dem erweiterten Gestenmodus (220) befindet; und
Wechseln vom Betrieb in dem Zeigemodus (210) zum Betrieb in dem erweiterten Gestenmodus (220) nach dem Erkennen der Bewegung des charakteristischen Objekts in dem Erfassungsbereich (120) als Moduswechselgeste (215), wobei die Moduswechselgeste (215) mindestens ein Eingabeobjekt (140) einer Vielzahl von Eingabeobjekten (140) umfasst, die mehrmals den Kontaktzustand wechseln, wobei sich der Wechsel des Kontaktzustands auf eine Eingabeoberfläche (550) bezieht;
wobei das Erkennen der Bewegung des charakteristischen Objekts in dem Erfassungsbereich (120) als Moduswechselgeste (215) das Bestimmen umfasst, dass sich die Vielzahl von Eingabeobjekten (140) auf der Eingabeoberfläche (550) befindet und dass das mindestens eine Eingabeobjekt (140) einen Schalter durch Drücken der Eingabeoberfläche (550) betätigt hat, wobei es sich beim Drücken der Eingabefläche (550) um den genannten Wechsel des Kontaktzustands handelt.

## Revendications

1. Dispositif de saisie (100) comprenant:
un élément de détection configuré pour détecter un mouvement d'objet dans une région de détection (120) ; et
un système de traitement (110) couplé à l'élément de détection, le système de traitement étant configuré pour:
fonctionner dans un mode de pointage (210), dans lequel le système de traitement (110) reconnaît un premier type de saisie glissante dans la région de détection (120) en tant que première commande de pointage durant le mode de pointage (210) ;
fonctionner dans un mode de gestuelle rehaussée (220), dans lequel le système de traitement (110) reconnaît une pluralité de commandes de gestes associée à une pluralité de différentes actions gestuelles durant le mode de gestuelle rehaussée (220), et dans lequel le système de traitement (110) reconnaît le premier type de saisie glissante dans la région de détection (120) comme première commande de geste de la pluralité de commande de gestes durant le mode de gestuelle rehaussée (220) ; et
passer du fonctionnement dans le mode de pointage (210) à un fonctionnement dans le mode de gestuelle rehaussée (220) après avoir reconnu un mouvement d'objet caractéristique dans la région de détection (120) en tant que geste de changement de mode (215), le geste de changement de mode (215) comprenant au moins un objet de saisie (140) d'une pluralité d'objets de saisie (140) qui change de multiples fois d'état de contact, dans lequel le changement d'état de contact se rapporte à une surface de saisie (550) ;
dans lequel le système de traitement (110) est configuré pour reconnaître le mouvement d'objet caractéristique dans la région de détection (120) en tant que geste de changement de mode (215) en déterminant que la pluralité d'objets de saisie (140) se trouve sur la surface de saisie (550) et que l'au moins un objet de saisie (140) a actionné un commutateur par pression sur la surface de saisie (550), la pression de la surface de saisie (550) constituant ledit changement d'état de contact.

2. Dispositif de saisie selon la revendication 1, dans lequel le système de traitement (110) est configuré pour reconnaître un second type de saisie glissante dans la région de détection (120) en tant que seconde commande de pointage durant le mode de pointage (210), dans lequel le système de traitement (110) est configuré pour reconnaître le second type de saisie glissante dans la région de détection (120) en tant que deuxième commande de geste de la pluralité de commandes de gestes durant le mode de gestuelle rehaussée (220), et dans lequel la première commande de geste et la deuxième commande de geste sont associées à différentes actions gestuelles.

3. Dispositif de saisie selon la revendication 1 dans lequel le système de traitement (110) est configuré en outre pour passer du mode de gestuelle rehaussée (220) au mode de pointage (210) en réponse à la détection d'une fin d'un mouvement d'objet suivant, le mouvement d'objet suivant se produisant dans la région de détection (120) après le mouvement d'objet caractéristique.

4. Dispositif de saisie selon la revendication 1 dans lequel le système de traitement (110) est configuré en outre pour:
passer du fonctionnement dans le mode de gestuelle rehaussée (220) au fonctionnement dans le mode de pointage (210) en réponse à la reconnaissance d'une saisie glissante suivante comme commande de geste de la pluralité de commandes de gestes, la saisie glissante suivante se produisant dans la région de détection (120) après le mouvement d'objet caractéristique.

5. Dispositif de saisie of claim 1 dans lequel le système de traitement (110) est configuré en outre pour passer du fonctionnement dans le mode de gestuelle rehaussée (220) au fonctionnement dans le mode de pointage (210) en réponse à au moins l'une reconnaissance d'un mouvement d'objet suivant en tant que commande de fin, le mouvement d'objet suivant se produisant dans la région de détection (120) après le mouvement d'objet caractéristique ; et l'écoulement d'une durée de temps prédéterminée.

6. Procédé d'exploitation d'un système électronique comprenant un dispositif de capteur de proximité (100) configuré pour détecter un mouvement d'objet dans une région de détection (120) et un écran d'affichage pour fournir un affichage visuel, le procédé comprenant:
le fonctionnement (1310) dans un mode de pointage (210), dans lequel le système électronique (100) est configuré pour reconnaître une pluralité de types de saisie glissante dans la région de détection (120) en tant que commandes de pointage destinées à interagir avec l'affichage visuel durant le mode de pointage (210) ;
la reconnaissance (1320), durant le fonctionnement dans le mode de pointage (210), d'un mouvement d'objet caractéristique dans la région de détection (120) en tant que geste de changement de mode (215), le geste de changement de mode (215) comprenant au moins un objet de saisie d'une pluralité d'objets de saisie (140) qui change de multiples fois d'état de contact, dans lequel le changement de l'état de contact se rapporte à une surface de saisie (550) ; et
le passage (1330) du fonctionnement du mode de pointage (210) au fonctionnement dans un mode de gestuelle rehaussée (220) après la reconnaissance du mouvement d'objet caractéristique dans la région de détection (120) en tant que geste de changement de mode (215), dans lequel le système électronique est configuré pour reconnaître la pluralité de types de saisie glissante en tant que pluralité de commandes de gestes associée à une pluralité d'actions gestuelles différentes durant le mode de gestuelle rehaussée (220) ;
dans lequel la reconnaissance du mouvement d'objet caractéristique dans la région de détection (120) en tant que geste de changement de mode (215) comprend la détermination que la pluralité d'objets de saisie (140) se trouve sur la surface de saisie (550) et que l'au moins un objet de saisie (140) a actionné un commutateur par pression sur la surface de saisie (550), la pression sur la surface de saisie (550) constituant ledit changement d'état de contact.

7. Procédé selon la revendication 6 comprenant en outre:
la reconnaissance d'un premier type de la pluralité de types de saisie glissante dans la région de détection (120) en tant que première commande de pointage durant le fonctionnement dans le mode de pointage (210) ; et
le déplacement d'un élément graphique dans l'affichage visuel en réponse à la reconnaissance du premier type de saisie glissante dans la région de détection (120) en tant que première commande de pointage.

8. Système de traitement comprenant:
des circuits de détection configurés pour détecter un mouvement d'objet dans une région de détection (120) ; et des circuits de traitement (110) configurés pour:
fonctionner dans un mode de pointage (210), dans lequel les circuits de traitement (110) reconnaissent un premier type de saisie glissante dans la région de détection (120) en tant que première commande de pointage durant le mode de pointage (210) ;
fonctionner dans un mode de gestuelle rehaussée (220), dans lequel les circuits de traitement (110) reconnaissent une pluralité de commandes de gestes associée à une pluralité de différentes actions gestuelles durant le mode de gestuelle rehaussée (220), et dans lequel les circuits de traitement (110) reconnaissent le premier type de saisie glissante dans la région de détection (120) comme première commande de geste de la pluralité de commandes de gestes durant le mode de gestuelle rehaussée (220) ; et
passer du fonctionnement dans le mode de pointage (210) au fonctionnement dans le mode de gestuelle rehaussée (220) après la reconnaissance d'un mouvement d'objet caractéristique dans la région de détection (120) en tant que geste de changement de mode (215), le geste de changement de mode (215) comprenant au moins un objet de saisie (140) d'une pluralité d'objets de saisie (140) qui change de multiples fois d'état de contact, dans lequel l'état de changement de contact se rapporte à une surface de saisie (550) ;
dans lequel la reconnaissance du mouvement d'objet caractéristique dans la région de détection (120) en tant que geste de changement de mode (215) comprend la détermination que la pluralité d'objets de saisie (140) se trouve sur la surface de saisie (550) et que l'au moins un objet de saisie (140) a actionné un commutateur par pression sur la surface de saisie (550), la pression sur la surface de saisie (550) constituant ledit changement d'état de contact.
